# EUROPEAN PATENT SPECIFICATION

(11) **EP 2 231 759 B1**
(45) Date of publication and mention of the grant of the patent: **22.11.2017**
(21) Application number: 07857777.2
(22) Date of filing: 19.12.2007
(51) Int. Cl.: C08K 3/36, C08L 21/00, C08L 15/00, B60C 1/00, B60C 13/00, B60C 15/00

(54) **TIRE AND CROSSLINKABLE ELASTOMERIC COMPOSITION COMPRISING DIATOMITE PARTICLES**
REIFEN UND VERNETZBARE ELASTOMERZUSAMMENSETZUNG MIT KIESELGUR
PNEU ET COMPOSITION ÉLASTOMÈRE RÉTICULABLE COMPRENANT DES PARTICULES DE DIATOMITE

(43) Date of publication of application: 29.09.2010
(73) Proprietor: Pirelli Tyre S.p.A., 20126 Milano (IT)
(72) Inventor: GIANNINI, Luca, I-20126 Milano (IT); NAHMIAS NANNI, Marco, I-20126 Milano (IT)
(74) Representative: Colombo, Stefano Paolo
(86) International application number: PCT/EP2007/064153
(87) International publication number: WO 2009/080091

(56) References cited:
- WO-A-2006/010479
- WO-A-2008/078822
- CN-A- 1 587 304
- JP-A- 2005 281 387

## Description

### Field of the invention

The present invention generally relates to a tire comprising diatomite particles.

More in particular, the present invention relates to a tire including at least one structural element obtained by crosslinking a crosslinkable elastomeric composition comprising diatomite particles having a relatively high BET surface area and a relatively high average maximum dimension.

### Background of the invention

In the rubber industry, in particular that of tires manufacturing, it is known practice to use additives with the crosslinkable elastomeric compositions to improve the mechanical properties of the finished products (i.e. the crosslinked manufactured products).
For example, static and dynamic moduli of the elastomeric compositions may be increased by increasing crosslinking density of these compositions by using a large amount of sulfur, or by using a large amount of carbon black, or a very fine and structured carbon black. However, the above ways of increasing static and dynamic moduli may lead to a number of drawbacks.
For example, it is known that the use of a large amount of sulfur may cause remarkable reversion phenomena, which result in modification of the tires performances during use. On the other side, it is known that carbon black gives the crosslinked manufactured products pronounced hysteresis properties, that is to say an increase in the dissipated heat under dynamic conditions, which results in an increase in the rolling resistance of the tire and the fuel consumption. In addition, a large amount of carbon black causes an increase in the viscosity of the elastomeric composition and, consequently, has a negative impact on the processability and extrudability of the crosslinkable elastomeric composition.

To overcome the drawbacks caused by the use of carbon black, the so-called "white" reinforcing fillers are usually used, in particular silica, in total or partial replacement for the carbon black. However, although the use of said reinforcing fillers leads to good tear resistance, it also entails a series of drawbacks essentially related to the poor affinity of these fillers with respect to the elastomeric polymers commonly used in the production of tires. In particular, to obtain a good degree of dispersion of the silica in the elastomeric polymers, it is necessary to subject the elastomeric compositions to a prolonged thermo mechanical blending action. To increase the affinity of the silica with the elastomeric polymers, it is necessary to use suitable coupling agents, such as, for example, sulfur-containing organosilane products. However, the need to use such coupling agents places a limitation on the maximum temperature which may be reached during the blending and thermo mechanical processing operations of the elastomeric compositions, to avoid the penalty of an irreversible thermal degradation of the coupling agents.

Moreover, the processability of such crosslinkable elastomeric compositions comprising reinforcing fillers such as carbon black and/or silica may require high temperatures, but this implies a reduction of the productivity, an excessive power consumption, and an increased risk of forming defects due to a partial early crosslinking ("scorching phenomena").

Usually, the above mentioned problems have been tackled by the addition of salts of fatty acids with sodium or zinc (soaps) or by the addition of lubricants or oils, that can reduce the viscosity and increase the flowability. However, the use of such ingredients involves the problem of a reduction of the tensile modulus and an increase in hysteresis of the resulting crosslinked elastomeric compositions.

Recent approaches for improving the processability of crosslinkable elastomeric compositions comprising silica have been directed to reducing or replacing the use of silica coupling agents by employing silica dispersing aids, such as monofunctional silica shielding agents (e.g., silica hydrophobating agents that chemically react with the surface silanol groups on the silica particles but are not reactive with the elastomeric polymers) and agents which physically shield the silanol groups, to prevent reagglomeration (flocculation) of the silica particles after compounding. Silica processing aids useful for such purposes are described, for example, in United States Patent US 6,512,035 disclosing the use of one or more monofunctional alkyl tin compounds, in United States Patent US 6,608,145 disclosing the use of silica dispersing aids, such as alkyl alkoxysilanes, glycols (e.g., diethylene glycol, or polyethylene glycol), fatty acid esters of hydrogenated and non-hydrogenated C₅ and C₆ sugars (e.g., sorbitan oleates), polyoxyethylene derivatives of the fatty acid esters, and fillers such as mica, talc, urea, clay, sodium sulfate, or in United States Patent US 7,041,745 disclosing the use of polar additive, such as the poly(vinyl acetate) (PVA).

United States Patent US 7,122,090 discloses a tire excellent in performance on ice and snow having a tread comprising a rubber sheet obtained from a rubber composition containing 2 to 50 parts by weight of short fiber or plate-like material based on 100 parts by weight of diene rubber, wherein said short fiber material has an average fiber diameter of 1 to 100 µm and average length of 0.1 to 5 mm and said plate-like material has an average thickness of 1 to 90 µm and average length of 0.1 to 5 mm. The short fiber is preferably organic and/or inorganic short fiber. An example of the organic short fiber is polyester fiber. Examples of the inorganic short fiber are glass fiber, carbon fiber, metal fiber (tungsten, iron, copper, platinum, stainless steel) and potassium titanate fiber. Examples of the plate-like material are aluminum whisker, potassium titanate whisker, aluminum borate whisker, titanate oxide type whisker and zinc oxide wisker.

Japanese Patent Application JP 2002/60553 discloses a rubber composition improving both a frictional force on ice and a wear performance obtained by blending 1 pts.wt to 30 pts.wt. of powder particles consisting essentially of at least one type of a material selected from among silicates, metal carbonates, metal sulfates, and aluminum oxide and has an average particle diameter of 1 µm to 300 µm, with a rubber composition obtained by blending and kneading 20 pts.wt. to 80 pts.wt. of carbon black having at least 70 m²/g of N₂SA and DPB oil absorption of at least 90 ml/100 g, 0 pts.wt. to 50 pts.wt. of precipitated silica, and other general-purpose compounding agents per 100 pts.wt. of diene rubber.

### Summary of the invention

The Applicant has faced the problem of improving the processability of the crosslinkable elastomeric compositions comprising reinforcing filler(s) without negatively affecting or even improving the mechanical properties (both static and dynamic) of the obtained crosslinked manufactured products, in particular of the obtained tires.
The Applicant has found that the above mentioned problem may be overcome by adding to the crosslinkable elastomeric compositions which may be used in the manufacturing of tires, diatomite particles having a BET surface area higher than or equal to about 10 m²/g and a micrometric average maximum dimension higher than or equal to about 0.3 µm.

In particular, the crosslinkable elastomeric compositions comprising such diatomite particles show low viscosity and good flowability during the manufacturing, in particular during the manufacturing of the green tires. Moreover, the obtained crosslinked manufactured products maintain substantially unchanged or even improved mechanical properties (both static and dynamic).
Furthermore, the Applicant has also found that the obtained crosslinked elastomeric compositions, show a reduced variation of the hardness and of the dynamic elastic modulus (E') as the temperature increases (namely, a reduced "thermoplastic behavior" of the crosslinked elastomeric compositions, which is of fundamental importance when using said crosslinkable elastomeric compositions in tires manufacturing).
Accordingly, in a first aspect, the present invention relates to a tire comprising at least one structural element including a crosslinked elastomeric material obtained by crosslinking a crosslinkable elastomeric composition comprising:
(a) 100 phr of at least one elastomeric polymer;
(b) from about 1 phr to about 150 phr, preferably from about 5 phr to about 100 phr, of diatomite particles having a BET surface area, measured according to Standard ISO 5794-1:2005, higher than or equal to about 10 m²/g, preferably higher than or equal to about 25 m²/g, more preferably higher than or equal to about 35 m²/g and an average maximum dimension higher than or equal to about 0.3 µm, preferably lower than or equal to about 35 µm, more preferably lower than or equal to about 15 µm;
(c) from about 5 phr to about 120 phr, preferably from about 20 phr to about 90 phr of at least one reinforcing filler, said tire comprising:
   - a carcass structure of a substantially toroidal shape, having opposite lateral edges associated with respective right-hand and left-hand bead structures;
   - a belt structure applied in a radially external position with respect to said carcass structure;
   - a tread band applied in a radially external position with respect to said belt structure;
   - a pair of sidewalls applied laterally on opposite sides with respect to said carcass structure;
   wherein said structural element is at least one of said pair of sidewalls or a pair of anti-abrasive layers placed in an axially external position with respect to said bead structures. Preferably, said bead structures comprise at least one bead core and at least one bead filler, said bead filler being said structural element.
   Preferably, said tire may further comprise:
   - a tread underlayer applied in a radially internal position with respect to said tread band; and, optionally
   - a pair of sidewall inserts extending radially between each of said bead structures and the corresponding lateral edge of said tread band; and optionally,
   - a pair of anti-abrasive layers placed in an axially external position with respect to said bead structures;
   wherein said structural element is at least one of said pair of sidewall inserts, or said pair of anti-abrasive layers.

For the purposes of the present description and of the claims which follow, the term "maximum dimension" means the major dimension of a diatomite particle, independently from the measurement direction, and the term "average maximum dimension" means the average of the major dimensions measured by a microscopy technique in a representative sample of diatomite particles.
For the purposes of the present description and of the claims which follow the term "phr" means the parts by weight of a given component of the crosslinkable elastomeric composition per 100 parts by weight of the elastomeric polymer(s).
The present invention, in at least one of the abovementioned aspects, may show one or more of the preferred characteristics hereinafter described.
According to one preferred embodiment, said diatomite particles (b) have a residue on a 325 Mesh sieve lower than or equal to about 2.5% by weight, more preferably lower than or equal to about 1% by weight, with respect to the total weight of the diatomite particles.
According to a further preferred embodiment, said diatomite particles (b) may comprise any desired types of diatomaceous earths, provided that the above mentioned characteristics of BET surface area and average maximum dimension and, preferably, 325 Mesh sieve residue, are met.

Diatomaceous earth is a light colored, porous sedimentary silica deposit, composed of the fossilized skeletons of diatoms, single celled aquatic plants which accumulate in marine or fresh water environments laid down in the Miocene period, about 15 million years ago. Diatomaceous earth comprises a honeycomb silica structure comprising a multiplicity of pores having a diameter in the order of some nanometers (10 nm - 100 nm) providing high absorptive capacity and surface area. Diatomaceous earth contains 90% SiO₂ plus Al, Fe, Ca and Mg oxides. The evolution and different environments in which diatoms are found have resulted in a wide variety of size, shape and appearance in the silica skeletal structure. The diatomite particles useful in the present invention have mainly a rod or acicular shape with one dimension, i.e. the length, prevailing on the other two dimensions, i.e. width and thickness, or a disc or tabular shape with one dimension, i.e. the thickness, shorter than the other two dimensions, i.e. length and width.

Materials consisting, in part or totally, of fragments of diatomite particles, as well as materials consisting of particles having different shape, such as barrel shape, or spherical shape, are also included in the present invention, provided that the above mentioned characteristics of BET surface area, average maximum dimension, and, preferably, 325 Mesh sieve residue, are met.

According to one preferred embodiment, said diatomite particles (b) have a BET surface area, measured according to Standard ISO 5794-1:2005, in the range of from about 25 m²/g to about 200 m²/g, more preferably from about 35 m²/g to about 100 m²/g.

According to a further preferred embodiment, said diatomite particles (b) have an average maximum dimension in the range of from about 0.5 µm to about 25 µm, preferably from about 1 µm to about 20 µm, more preferably from about 2 µm to about 15 µm.

According to a further preferred embodiment, said diatomite particles (b) have a residue on a 325 Mesh sieve lower than or equal to 0.5% by weight, with respect to the total weight of the diatomite particles.

The diatomite particles (b) above reported are commercially available, and may be purchased, for example, from Celite Corporation, or from Shengzhou Huali Diatomite Products Co., Ltd. Examples of commercial products which may be advantageously used according to the present invention are CelTix™ and Diafil® 990 from Celite Corporation; or CD™ 120 from Shengzhou Huali Diatomite Products Co., Ltd.

Without being limited by any theoretical explanation, the Applicant believes that the reinforcing properties of the diatomite particles employed in the present invention are specifically due to the combination of both the relatively high BET surface area and the relatively high dimensions (i.e. the maximum dimension in the micron range) of the individual diatomite particles. Moreover, said relatively high dimensions may reduce the self-affinity of the individual diatomite particles, so reducing aggregation problems between the individual diatomite particles and contributing to easy processability of elastomeric compositions featuring such diatomite particles as reinforcing fillers.

The crosslinkable elastomeric compositions according to the present invention preferably comprise diatomite particles in amounts of from about 1 phr to about 150 phr, more preferably from about 5 phr to about 100 phr. Crosslinkable elastomeric compositions having diatomite particles content of from about 5 phr to about 30 phr, may be particularly advantageous.

According to one preferred embodiment, said at least one elastomeric polymer (a) may be selected, for example, from (a₁) diene elastomeric polymers which are commonly used in sulfur-crosslinkable elastomeric compositions, that are particularly suitable for producing tires, that is to say from elastomeric polymers or copolymers with an unsaturated chain having a glass transition temperature (Tg) generally below about 20°C, preferably in the range of from about 0°C to about -110°C. These polymers or copolymers may be of natural origin or may be obtained by solution polymerization, emulsion polymerization or gas-phase polymerization of one or more conjugated diolefins, optionally blended with at least one comonomer selected from monovinylarenes and/or polar comonomers. Preferably, the obtained polymers or copolymers contain said at least one comonomer selected from monovinylarenes and/or polar comonomers in an amount of not more than about 60% by weight.

The conjugated diolefins generally contain from about 4 to about 12, preferably from about 4 to about 8 carbon atoms, and may be selected, for example, from: 1,3-butadiene, isoprene, 2,3-dimethyl-1,3-butadiene, 1,3-pentadiene, 1,3-hexadiene, 3-butyl-1,3-octadiene, 2-phenyl-1,3-butadiene, or mixtures thereof. 1,3-butadiene, or isoprene, are particularly preferred.

Monovinylarenes which may optionally be used as comonomers generally contain from about 8 to about 20, preferably from about 8 to about 12 carbon atoms, and may be selected, for example, from: styrene; 1-vinylnaphthalene; 2-vinylnaphthalene; various alkyl, cycloalkyl, aryl, alkylaryl or arylalkyl derivatives of styrene such as, for example, α-methylstyrene, 3-methylstyrene, 4-propylstyrene, 4-cyclohexylstyrene, 4-dodecylstyrene, 2-ethyl-4-benzylstyrene, 4-p-tolylstyrene, 4-(4-phenylbutyl)styrene, or mixtures thereof. Styrene is particularly preferred.

Polar comonomers which may optionally be used may be selected, for example, from: vinylpyridine, vinylquinoline, acrylic acid and alkylacrylic acid esters, nitriles, or mixtures thereof, such as, for example, methyl acrylate, ethyl acrylate, methyl methacrylate, ethyl methacrylate, acrylonitrile, or mixtures thereof.

Preferably, said diene elastomeric polymer (a₁) may be selected, for example, from: cis-1,4-polyisoprene (natural or synthetic, preferably natural rubber), 3,4-polyisoprene, polybutadiene (in particular, polybutadiene with a high 1,4-cis content), optionally halogenated isoprene/isobutene copolymers, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

Alternatively, said at least one elastomeric polymer (a) may be selected, for example, from (a₂) elastomeric polymers of one or more monoolefins with an olefinic comonomer or derivatives thereof. The monoolefins may be selected, for example, from: ethylene and α-olefins generally containing from about 3 to about 12 carbon atoms, such as, for example, propylene, 1-butene, 1-pentene, 1-hexene, 1-octene, or mixtures thereof. The following are preferred: copolymers between ethylene and an α-olefin, optionally with a diene; isobutene homopolymers or copolymers thereof with small amounts of a diene, which are optionally at least partially halogenated. The diene optionally present generally contains from about 4 to about 20 carbon atoms and is preferably selected from: 1,3-butadiene, isoprene, 1,4-hexadiene, 1,4-cyclohexadiene, 5-ethylidene-2-norbornene, 5-methylene-2-norbornene, vinylnorbornene, or mixtures thereof. Among these, the following are particularly preferred: ethylene/propylene copolymers (EPR) or ethylene/propylene/diene copolymers (EPDM); poly-isobutene; butyl rubbers; halobutyl rubbers, in particular chlorobutyl or bromobutyl rubbers; or mixtures thereof.

Mixtures of the abovementioned diene elastomeric polymers (a₁) with the abovementioned elastomeric polymers (a₂), may also be used.

The above reported elastomeric polymers (a) may optionally be functionalized by reaction with suitable terminating agents or coupling agents. In particular, the diene elastomeric polymers (a₁) obtained by anionic polymerization in the presence of an organometallic initiator (in particular, an organolithium initiator) may be functionalized by reacting the residual organometallic groups derived from the initiator with suitable terminating agents or coupling agents such as, for example, imines, carbodiimides, alkyltin halides, substituted benzophenones, alkoxysilanes or aryloxysilanes (see, for example, European Patent EP 451,604, or United States Patents US 4,742,124, or US 4,550,142).

The above reported elastomeric polymers (a) may optionally include at least one functional group which may be selected, for example, from: carboxylic groups, carboxylate groups, anhydride groups, ester groups, epoxy groups, or mixtures thereof.

According one preferred embodiment, said at least one reinforcing filler (c) may be selected from those commonly used for crosslinked manufactured products, in particular for tires, such as, for example, carbon black, silica, alumina, aluminosilicates, calcium carbonate, kaolin, or mixtures thereof. Carbon black, silica and mixture thereof are particularly preferred.

According to one preferred embodiment, said carbon black reinforcing filler may be selected from those having a surface area not lower than or equal to about 20 m²/g (determined by CTAB absorption as described in Standard ISO 6810:1995).

According to one preferred embodiment, said silica reinforcing filler may be selected, for example, from: pyrogenic silica, precipitated amorphous silica, wet silica (hydrated silicic acid), dry silica (anhydrous silicic acid), fumed silica, calcium silicate, or mixtures thereof. Other suitable fillers include aluminum silicate, magnesium silicate, or mixtures thereof. Among these, precipitated amorphous wet-process, hydrated silicas are preferred. These silicas are so-called because they are produced by a chemical reaction in water, from which they are precipitated as ultrafine, spherical particles. These primary particles strongly associate into aggregates, which in turn combine less strongly into agglomerates. The BET surface area, as measured according to Standard ISO 5794-1:2005, gives the best measure of the reinforcing character of different silicas.

Silica reinforcing fillers which may be advantageously used according to the present invention, preferably have a surface area of from about 32 m²/g to about 400 m²/g, more preferably from about 100 m²/g to about 250 m²/g, even more preferably from about 150 m²/g to about 220 m²/g. The pH of said silica reinforcing fillers is, generally, of from about 5.5 to about 7.0, preferably from about 5.5 to about 6.8.

Examples of silica reinforcing fillers which may be used according to the present invention and are available commercially are the products known by the name of Hi-Sil® 190, Hi-Sil® 210, Hi-Sil® 215, Hi-Sil® 233, Hi-Sil® 243, from PPG Industries; or the products known by the name of Ultrasil® VN2, Ultrasil® VN3, Ultrasil® 7000, from Degussa; or the product known under the name of Zeosil® 1165MP from Rhodia.

According to a further preferred embodiment, said at least one reinforcing filler (c) may be selected from nanosized layered materials. Preferably, said nanosized layered materials have an individual layer thickness of from about 0.01 nm to about 30 nm, more preferably from about 0.2 nm to about 15 nm, even more preferably from about 0.5 nm to about 2 nm.

Layered materials which may be advantageously used according to the present invention, may be selected, for example, from: phyllosilicates such as, for example, smectites, for example, montmorillonite, bentonite, nontronite, beidellite, volkonskoite, hectorite, saponite, sauconite; vermiculite; halloisite; sericite; aluminate oxides; hydrotalcite; or mixtures thereof. Montmorillonite is particularly preferred. These layered material generally contains exchangeable ions such as sodium (Na⁺), calcium (Ca²⁺), potassium (K⁺), magnesium (Mg²⁺), hydroxide (HO⁻), or carbonate (CO₃²⁻), present at the interlayer surfaces. In order to render said layered materials more compatible with the elastomeric polymer(s) said layered materials may be treated with at least one compatibilizing agent which may be selected, for example, from the quaternary ammonium or phosphonium salts. The treatment of said layered materials with the compatibilizing agent may be carried out according to known methods such as, for example, by an ion exchange reaction between the layered material and the compatibilizer: further details are described, for example, in United States Patents US 4,136,103, US 5,747,560, or US 5,952,093.

Examples of layered materials reinforcing fillers which may be used according to the present invention and are available commercially are the products known by the name of Dellite® 67G, Dellite® 72T, Dellite® 43B, from Laviosa Chimica Mineraria S.p.A.; Cloisite® 25A, Cloisite® 10A, Cloisite® 15A, Cloisite® 20A, from Southern Clays; Nanofil® 5, Nanofil® 8, Nanofil® 9, from Süd Chemie; Bentonite® AG/3 from Dal Cin S.p.A.

The crosslinkable elastomeric composition of the present invention may advantageously incorporate at least one silane coupling agent (d) capable of interacting with both the diatomite particles (b) and the reinforcing fillers (c) and of linking them to the elastomeric polymer(s) during the vulcanization.

Coupling agents (d) that are preferably used are those based on silane which may be identified, for example, by the following structural formula (I):

(R₂)₃Si-CₜH₂ₜ-X (I)

wherein the groups R₂, which may be equal or different from each other, are selected from: alkyl, alkoxy or aryloxy groups or from halogen atoms, on condition that at least one of the groups R₂ is an alkoxy or aryloxy group; t is an integer of from about 1 to about 6 extreme included; X is a group selected from: nitroso, mercapto, amino, epoxide, vinyl, imide, chloro, -(S)ᵤCₜH₂ₜ-Si-(R₂)₃ or or -S-COR₂ in which u and t are integers of from about 1 to about 6 extremes included and the groups R₂ are defined as reported above.

Among the coupling agents that are particularly preferred are bis(3-triethoxysilylpropyl)tetrasulfide or bis(3-triethoxysilylpropyl)disulfide. Said coupling agents may be used as such or as a suitable mixture with an inert filler (for example, carbon black) so as to facilitate their incorporation into the crosslinkable elastomeric composition.

The crosslinkable elastomeric composition according to the present invention preferably comprises at least one coupling agent (d) in amounts of from about 0 phr to about 10 phr, more preferably from about 0.5 phr to about 5 phr. Crosslinkable elastomeric composition having coupling agent contents of from about 0.5 phr to about 2 phr may be particularly advantageous.

The crosslinkable elastomeric composition of the present invention may advantageously incorporate at least one condensation catalyst (e) capable of improving the interaction of with both the diatomite particles (b) and the reinforcing fillers (c) and of linking them to the elastomeric polymer(s) during the vulcanization.

According to one preferred embodiment, said condensation catalyst (e) may be selected, for example, from: metal carboxylates; arylsulphonic acids or derivatives thererof; amines and alkanolamines; strong inorganic acids or bases; organic acids; blocked acids; zeolites modified by reaction with at least one carboxylic acid and/or sulphonic acid; or mixtures thereof. Metal carboxylates are particularly preferred, dibutyltin dilaurate is even particularly preferred.

A more detailed description of said condensation catalysts may be found for example, in European Patent Application EP 1,252,230.

The crosslinkable elastomeric composition according to the present invention preferably comprises at least one condensation catalyst (e) in amounts of from about 0 phr to about 5 phr, more preferably from about 0.5 phr to about 2 phr.

The crosslinkable elastomeric composition above reported may be vulcanized according to known techniques, in particular with sulfur-based vulcanizing systems commonly used for elastomeric polymers. To this end, in the elastomeric composition, after one or more steps of thermomechanical processing, a sulfur-based vulcanization agent is incorporated together with vulcanization accelerators. In the final processing step, the temperature is generally kept below 120°C and preferably below 100°C, so as to avoid any unwanted pre-crosslinking phenomena.

The vulcanization agent most advantageously used is sulfur, or molecules containing sulfur (sulfur donors), with vulcanization accelerators and vulcanization activators known to those skilled in the art.

Vulcanization activators that are particularly effective are zinc compounds, and in particular ZnO, ZnCO₃, zinc salts of saturated or unsaturated fatty acids containing from 8 to 18 carbon atoms, such as, for example, zinc stearate, which are preferably formed in situ in the elastomeric composition from ZnO and fatty acid, and also BiO, PbO, Pb₃O₄, PbO₂, or mixtures thereof.

Vulcanization accelerators that are commonly used may be selected from: dithiocarbamates, guanidine, thiourea, thiazoles, sulfenamides, thiurams, amines, xanthates, or mixtures thereof.

Said crosslinkable elastomeric composition may comprise other commonly used additives selected on the basis of the specific application for which the composition is intended. For example, the following may be added to said crosslinkable elastomeric composition: antioxidants, anti-ageing agents, plasticizers, adhesives, antiozonants (in particular, of the p-phenylenediamine type), waxes, modifying resins, fibers (for example, Kevlar® pulp), or mixtures thereof.

For the purpose of further improving the processability, a plasticizer generally selected from mineral oils, vegetable oils, synthetic oils, or mixtures thereof, such as, for example, aromatic oil, naphthenic oil, phthalates, soybean oil, or mixtures thereof, may be added to said crosslinkable elastomeric composition. The amount of plasticizer generally ranges of from about 0 phr to about 70 phr, preferably from of about 1 phr to about 30 phr.

The above reported crosslinkable elastomeric composition may be prepared by mixing together the elastomeric polymer(s), the diatomite particles (b) and the reinforcing fillers (c) above reported, with the other additives optionally present, according to techniques known in the art.

The mixing may be carried out, for example, using an open mixer of open-mill type, or an internal mixer of the type with tangential rotors (Banbury) or with interlocking rotors (Intermix), or in continuous mixers of Ko-Kneader type (Buss), or of co-rotating or counter-rotating twin-screw or multi-screw type. Alternatively, the diatomite particles (b) may be pre-mixed with the elastomeric polymer(s) so as to form a masterbatch which will be subsequently mixed with the remaining components of the crosslinkable elastomeric composition.

The process for producing the tire according to the present invention may be carried out according to techniques and using apparatus that are known in the art, said process including manufacturing a green tire, and subsequently moulding and vulcanizing the green tire.

### Brief description of the drawings

The present invention will now be illustrated in further detail by means of illustrative embodiments, with reference to the attached figures wherein:
- Fig. 1 is a view in cross-section of a portion of a tire made according to a first embodiment of the present invention;
- Fig. 2 is a view in cross-section of a portion of a tire made according to a further embodiment of the present invention.

### Detailed description of the preferred embodiments

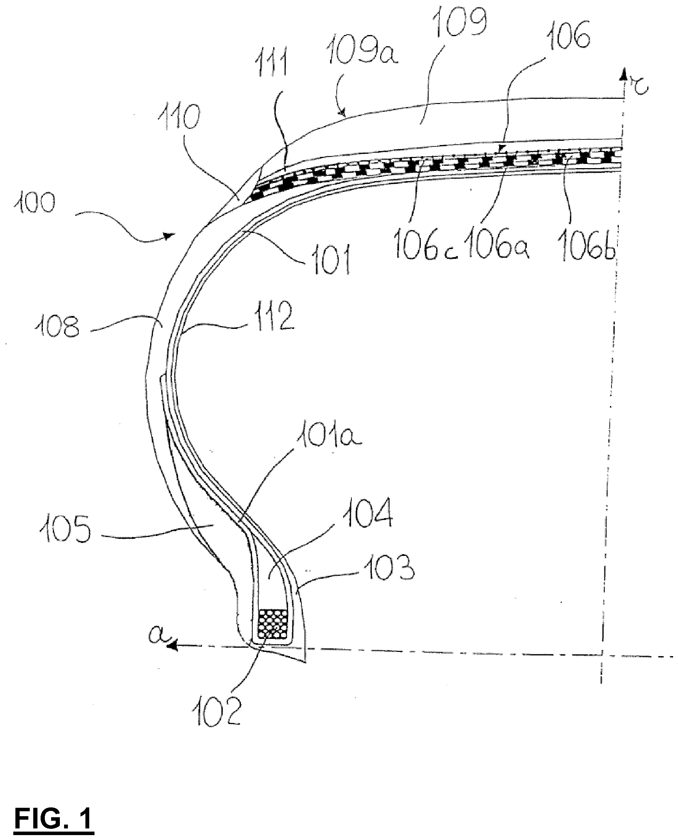

With reference to Fig. 1, "a" indicates an axial direction and "r" indicates a radial direction. For simplicity, Fig. 1 shows only a portion of the tire, the remaining portion not represented being identical and symmetrically arranged with respect to the radial direction "r".

The tire (100) comprises at least one carcass ply (101), the opposite lateral edges of which are associated with respective bead structures (103) comprising at least one bead core (102) and at least one bead filler (104). The association between the carcass ply (101) and the bead core (102) is achieved here by turning back the opposite lateral edges of the carcass ply (101) around the bead core (102) so as to form the so-called carcass turn-up (101a) as shown in Fig. 1.
Alternatively, the conventional bead core (102) may be replaced with at least one annular insert formed from rubberized wires arranged in concentric coils (not represented in Fig. 1) (see, for example, European Patent Applications EP 928,680 or EP 928,702). In this case, the carcass ply (101) is not turned-back around said annular inserts, the coupling being provided by a second carcass ply (not represented in Fig. 1) applied externally over the first.
The carcass ply (101) usually comprises a plurality of reinforcing cords arranged parallel to each other and at least partially coated with a layer of a crosslinked elastomeric composition. These reinforcing cords are usually made of textile fibers, for example rayon, nylon or polyethylene terephthalate, or of steel wires stranded together, coated with a metal alloy (for example, copper/zinc, zinc/manganese, zinc/molybdenum/cobalt alloys, and the like).
The carcass ply (101) is usually of radial type, i.e. it incorporates reinforcing cords arranged in a substantially perpendicular direction relative to a circumferential direction.
The bead core (102) is enclosed in a bead structure (103), defined along an inner circumferential edge of the tire (100), with which the tire engages on a rim (not represented in Fig. 1) forming part of a vehicle wheel. The space defined by each carcass turn-up (101a) contains a bead filler (104). An anti-abrasive layer (105), which may comprise an elastomeric composition according to an aspect of the present invention, is usually placed in an axially external position relative to the carcass turn-up (101a).
A belt structure (106) is applied along the circumference of the carcass ply (101). In the particular embodiment of Fig. 1, the belt structure (106) comprises two belt strips (106a, 106b) which incorporate a plurality of reinforcing cords, typically metal cords, which are parallel to each other in each strip and intersecting with respect to the adjacent strip, oriented so as to form a predetermined angle relative to a circumferential direction. On the radially outermost belt strip (106b), at least one zero-degree reinforcing layer (106c) may optionally be applied, commonly known as a "0° belt", which generally incorporates a plurality of reinforcing cords, typically textile cords, arranged at an angle of a few degrees relative to a circumferential direction, usually coated with a crosslinked elastomeric composition.

A tread band (109), whose lateral edges are connected to the side walls (108), is applied circumferentially in a position radially external to the belt structure (106). Externally, the tread band (109) has a rolling surface (109a) designed to come into contact with the ground. Circumferential grooves which are connected by transverse notches (not represented in Fig. 1) so as to define a plurality of ribs and/or blocks of various shapes and sizes distributed over the rolling surface (109a) are generally made in this surface (109a), which is represented for simplicity in Fig. 1 as being smooth.
A sidewall (108), which may comprise an elastomeric composition according to an aspect of the present invention, is also applied externally onto the carcass ply (101), this sidewall extending, in an axially external position, from the bead (103) to the end of the belt structure (106).

A tread underlayer (111), may be placed between the belt structure (106) and the tread band (109). As represented in Fig. 1, the tread underlayer (111) may have uniform thickness. Alternatively, the tread underlayer (111) may have a variable thickness in the transversal direction. For example, the thickness may be greater near its outer edges than at a central zone. In Fig. 1, said tread underlayer (111) extends over a surface substantially corresponding to the surface of development of said belt structure (106). Alternatively, said tread underlayer (111) extends only along at least one portion of the development of said belt structure (106), for instance at opposite side portions of said belt structure (106) (not represented in Fig. 1).
A strip made of elastomeric material (110), commonly known as a "mini-sidewall", may optionally be present in the connecting zone between the sidewalls (108) and the tread band (109), this mini-sidewall generally being obtained by co-extrusion with the tread band and allowing an improvement in the mechanical interaction between the tread band (109) and the side walls (108). Alternatively, the end portion of the side wall (108) directly covers the lateral edge of the tread band (109).

In the case of tubeless tires, a first layer of crosslinked elastomeric material (112), generally known as a "liner", which provides the necessary impermeability to the inflation air of the tire, may also be provided in an inner position relative to the carcass ply (101).
Alternatively, a second layer of crosslinked elastomeric material (not shown in Fig. 1), generally known as a "under-liner", may be placed between the liner (112) and the carcass ply (101).

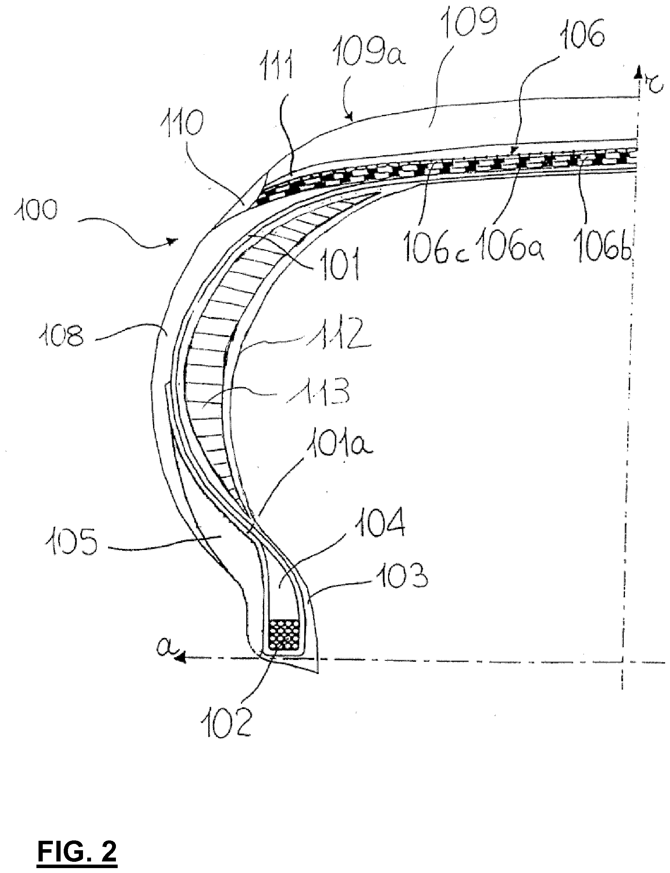

Fig. 2 shows a tire (100) having a structure as described in Fig. 1 further comprising a sidewall insert (113). The sidewall insert (113) extends radially between the bead structure (103) and the lateral edge of the tread band (109). The sidewall insert (113) is placed in an axially internal or external position with respect to the carcass ply: for example, as represented in Fig. 2, the sidewall insert (113) is placed between the carcass ply (101) and the liner (112).

Alternatively, in the case more than one carcass ply is present, a sidewall insert (113) may be placed between two of said carcass plies (not represented in Fig. 2).
Alternatively, a sidewall insert (113) may be placed between the carcass ply and the sidewall (not represented in Fig. 2).
More than one sidewall insert may be present as disclosed, for example, in United States Patent US 5,238,040, or in European Patent Application EP 943,466.

Although the present invention has been illustrated specifically in relation to a tire, other crosslinked elastomeric manufactured products that may be produced according to the present invention may be, for example, conveyor belts, drive belts, or hoses.

The present invention will be further illustrated below by means of a number of preparation examples, which are given for purely indicative purposes and without any limitation of this invention.

The samples of the following examples were evaluated according to the following tests and measurements.

The Mooney viscosity ML(1+4) at 100°C was measured according to Standard ISO 289-1:2005, on the non-crosslinked elastomeric compositions obtained as described below.

The tensile modulus (50% Modulus, 100% Modulus, and 300% Modulus), the tensile strength, the elongation at break, as well as the energy at break, were measured according to Standard ISO 37:2005, on samples of the elastomeric compositions described below crosslinked at 170°C, for 10 min.

The hardness in IRHD degrees (at 10°C, at 23°C or at 100°C) was measured according to Standard ISO 48:2007, on samples of the elastomeric compositions crosslinked at 170°C, for 10 min.

The dynamic mechanical properties were measured using an Instron dynamic device in the traction-compression mode according to the following methods. A test piece of the crosslinked elastomeric composition (crosslinked at 170°C, for 10 min) having a cylindrical form (length = 25 mm; diameter = 14 mm), compression-preloaded up to a 25% longitudinal deformation with respect to the initial length, and kept at the prefixed temperature (23°C, 70°C) for the whole duration of the test, was submitted to a dynamic sinusoidal strain having an amplitude of ±3.5% with respect to the length under pre-load, with a 100 Hz frequency. The dynamic mechanical properties are expressed in terms of dynamic elastic modulus (E') and Tan delta (loss factor) values. The Tan delta value is calculated as a ratio between viscous modulus (E") and elastic modulus (E'). The thermoplastic behavior is evaluated as the difference ΔE' of the dynamic elastic modulus measured at two reference temperatures selected on the basis of the kind of elastomeric composition and/or its application in the tire.

### EXAMPLE 1

### Preparation of elastomeric compositions 1 to 3

The elastomeric compositions 1 to 3 given in Table 1 were prepared as follows (the amounts of the various components are given in phr).

All the components, except sulfur, accelerator (TBBS) and retardant (PVI), were mixed together in an internal mixer (model Pomini PL 1.6) for about 5 min (1^{st} Step).

As soon as the temperature reached 145±5°C, the elastomeric composition was discharged. The sulfur, accelerator (TBBS) and retardant (PVI), were then added and mixing was carried out in an open roll mixer (2^{nd} Step).

**TABLE 1**

| SAMPLE | 1 (*) | 2 (^) | 3 (^) |
|---|---|---|---|
| 1^{st} STEP | | | |
| NR | 40.0 | 40.0 | 40.0 |
| BR | 60.0 | 60.0 | 60.0 |
| N550 | 70.0 | 60.0 | 50.0 |
| X50S® | 1.0 | 1.0 | 2.0 |
| Stearic Acid | 2.0 | 2.0 | 2.0 |
| CelTix™ | - | 12.8 | 25.6 |
| Zinc Oxide | 3.3 | 3.3 | 3.3 |
| 6-PPD | 2.0 | 2.0 | 2.0 |

| 2^{nd} STEP | | | |
|---|---|---|---|
| TBBS | 1.4 | 1.4 | 1.4 |
| PVI | 0.3 | 0.3 | 0.3 |
| Sulfur | 4.1 | 4.1 | 4.1 |

| | | | |
|---|---|---|---|
| (*): comparison; (^): invention. NR: natural rubber (Standard Thai Rubber STR 20 - Thaiteck Rubber) BR: polybutadiene (Europrene Neocis® - Polimeri Europa) N550: carbon black; X50S®: 1:1 mixture of bis[3-(triethoxysilyl)propyl]tetrasulfide and N330 carbon black (X50S® - Evonik-Degussa); CelTix™: diatomite particles having a BET surface area of 45 m²/g, a residue on a 325 Mesh sieve lower than 1% by weight with respect to the total weight of the diatomite particles, and an average maximum dimension of 10 µm (Celite Corporation); 6-PPD (antioxidant): N-(1,3-dimethylbutyl)-N'-phenyl-p-phenylene-diamine (Santoflex™ 6PPD - Flexsys); TBBS (accelerator): N-tert-butyl-2-benzothiazylsulfenamide (Vulkacit® NZ/EGC - Lanxess); PVI (retardant): N-(cyclohexylthio)phthalimide (Santogard™ PVI - Flexsys). | | | |

All the samples were evaluated as described above and the results were summarized in the following Table 2.

**TABLE 2**

| Results | 1 (*) | 2 (^) | 3 (^) |
|---|---|---|---|
| GREEN PROPERTIES | | | |
| Mooney ML (1+4) 100°C | 77.3 | 72.7 | 68.8 |

| STATIC MECHANICAL PROPERTIES | | | |
|---|---|---|---|
| IRHD Hardness 23°C | 77.7 | 76.7 | 75.0 |
| IRHD Hardness 100°C | 74.9 | 73.7 | 72.6 |
| Tensile modulus 50% [MPa] | 2.68 | 2.75 | 2.79 |
| Tensile modulus 100% [MPa] | 5.75 | 5.52 | 5.53 |
| Tensile strength [MPa] | 13.65 | 15.78 | 14.17 |
| Elongation at break [%] | 219.5 | 299.3 | 304.6 |
| Energy [J/cm³] | 13.87 | 23.88 | 22.76 |

| DYNAMIC MECHANICAL PROPERTIES | | | |
|---|---|---|---|
| E' (23°C) | 10.66 | 11.04 | 10.08 |
| E' (70°C) | 9.18 | 9.48 | 8.67 |
| Tan delta (23°C) | 0.137 | 0.141 | 0.133 |
| Tan delta (70°C) | 0.104 | 0.110 | 0.100 |

| | | | |
|---|---|---|---|
| (*): comparison; (^): invention. | | | |

The samples 2 and 3 according to the present invention showed a viscosity lower than that of sample 1 (comparative). A reduced viscosity in the non-crosslinked state means a better processability. Hardness remain substantially unchanged in all cases and for both temperatures considered.

The static mechanical properties, in particular tensile strength, elongation at break, and energy at break, were greatly improved in samples 2 and 3. The dynamical mechanical properties were not negatively affected in samples 2 and 3.

### EXAMPLE 2

### Preparation of elastomeric compositions 4 and 5

The elastomeric compositions 4 and 5 given in Table 3 were prepared as follows (the amounts of the various components are given in phr).

All the components, except ZnO, 6-PPD, sulfur and accelerator (CBS), were mixed together in an internal mixer (model Pomini PL 1.6) for about 5 min (1^{st} Step). As soon as the temperature reached 145±5°C, the elastomeric composition was discharged.

After 24 hours, ZnO and 6-PPD were mixed with the 1^{st} step composition in an internal mixer (model Pomini PL 1.6) for about 4 min, up to a temperature of 125±5°C and then the elastomeric composition was discharged (2^{nd} step).

The sulfur and accelerator (CBS), were then added and mixing was carried out in an open roll mixer (3^{rd} Step).

**TABLE 3**

| SAMPLE | 4 (*) | 5 (^) |
|---|---|---|
| 1^{st} STEP | | |
| S-SBR | 80.0 | 80.0 |
| BR | 20.0 | 20.0 |
| Silica | 63.0 | 53.0 |
| CelTix™ | - | 11.5 |
| X50S® | 10.0 | 10.0 |
| Stearic Acid | 2.0 | 2.0 |
| Zinc Stearate | 2.0 | 2.0 |
| Wax | 1.0 | 1.0 |
| TMQ | 1.0 | 1.0 |

| 2^{nd} STEP | | |
|---|---|---|
| Zinc Oxide | 2.5 | 2.5 |
| 6-PPD | 2.0 | 2.0 |

| 3^{rd} STEP | | |
|---|---|---|
| CBS | 2.84 | 2.84 |
| Sulfur | 1.20 | 1.20 |

| | | |
|---|---|---|
| (*): comparison; (^): invention. S-SBR: solution-prepared styrene/1,3-butadiene copolymer having a styrene content of 25% by weight and a vinyl content of 67% by weight, with respect to the total copolymer weight; and containing 36.8 phr of MES oil (Europrene® SOL R 72612 - Polimeri Europa); BR: polybutadiene (Europrene Neocis® - Polimeri Europa) Silica: Zeosil® 1165 MP (Rhodia); X50S®: 1:1 mixture of bis[3-(triethoxysilyl)propyl]tetrasulfide and N330 carbon black (X50S® - Evonik-Degussa); TMQ (anti-aging): polymerized 2,2,4-trimethyl-1,2-dihydroquinoline polymer (Vulcanox® HS/LG - Lanxess); CelTix™: diatomite particles having a BET surface area of 45 m²/g, a residue on a 325 Mesh sieve lower than 1% by weight with respect to the total weight of the diatomite particles, and an average maximum dimension of 10 µm (Celite Corporation); 6-PPD (antioxidant): N-(1,3-dimethylbutyl)-N'-phenyl-p-phenylene-diamine (Santoflex™ 6PPD - Flexsys); CBS (accelerator): N-cyclohexyl-2-benzothiazyl-sulphenamide (Vulkacit® CZ/EGC - Lanxess). | | |

All the samples were evaluated as described above and the results were summarized in the following Table 4.

**TABLE 4**

| Results | 4 (*) | 5 (^) |
|---|---|---|
| GREEN PROPERTIES | | |
| Mooney ML (1+4) 100°C | 88.4 | 76.2 |
| Scorch Time MS 127°C [min] | 26.6 | 27.3 |

| STATIC MECHANICAL PROPERTIES | | |
|---|---|---|
| IRHD Hardness 23°C | 76.8 | 73.7 |
| IRHD Hardness 100°C | 71.4 | 69.3 |
| ΔIRHD | 5.4 | 4.4 |
| Tensile modulus 50% [MPa] | 1.58 | 1.73 |
| Tensile modulus 100% [MPa] | 2.90 | 3.47 |
| Tensile modulus 300% [MPa] | 12.91 | 13.10 |
| Tensile strength [MPa] | 16.04 | 16.76 |
| Elongation at break [%] | 387 | 397 |
| Energy [J/cm³] | 28.50 | 32.91 |

| DYNAMIC MECHANICAL PROPERTIES | | |
|---|---|---|
| E' (10°C) | 13.09 | 12.31 |
| E' (23°C) | 10.27 | 9.61 |
| E' (70°C) | 7.28 | 7.24 |
| ΔE' (10°C - 70°C) | 5.81 | 5.07 |
| Tan delta (10°C) | 0.450 | 0.441 |
| Tan delta (23°C) | 0.301 | 0.274 |
| Tan delta (70°C) | 0.145 | 0.125 |

| | | |
|---|---|---|
| (*): comparison; (^): invention. | | |

The sample 5 according to the present invention showed a viscosity lower than that of sample 4 (comparative). A reduced viscosity in the non-crosslinked state means a better processability. Hardness decreases, and more importantly, the difference in hardness between 23°C and 100°C decreases, which is an indication of a lower thermoplastic behavior.

The static mechanical properties were improved in sample 5, especially modulus at 100%, and energy. The dynamical mechanical properties of sample 5 were also improved, in particular in terms of reduced variation in E' with temperature (reduced "thermoplasticity", confirming IRHD indication) and of reduced hysteresis (lower Tan delta at 70°C), usually taken as indicator of lower rolling resistance of the tire.

### EXAMPLE 3

### Preparation of elastomeric compositions 6 to 8

The elastomeric compositions 6 to 8 given in Table 5 were prepared as follows (the amounts of the various components are given in phr).

Natural rubber (NR), carbon black (N326), and stearic acid were mixed together in an internal mixer (model Pomini PL 1.6) for about 5 min (1^{st} Step). As soon as the temperature reached 145±5°C, the elastomeric composition was discharged.

After 24 hours, ZnO, 6-PPD, silane (X50S®), CelTix®, or N326, were mixed with the 1^{st} step composition in an internal mixer (model Pomini PL 1.6) for about 5 min, up to a temperature of 145±5°C and then the elastomeric composition was discharged (2^{nd} Step).

The sulfur, accelerator (TBBS) and retardant (PVI), were then added and mixing was carried out in an open roll mixer (3^{rd} Step).

**TABLE 5**

| SAMPLE | 6 (*) | 7 (^) | 8 (^) |
|---|---|---|---|
| 1^{st} STEP | | | |
| NR | 100.0 | 100.0 | 100.0 |
| N326 | 50.0 | 50.0 | 50.0 |
| Stearic Acid | 2.0 | 2.0 | 2.0 |

| 2^{nd} STEP | | | |
|---|---|---|---|
| Zinc Oxide | 7.0 | 7.0 | 7.0 |
| 6-PPD | 2.0 | 2.0 | 2.0 |
| N326 | 20.0 | - | - |
| X50S® | - | - | 1.04 |
| CelTix™ | - | 26.0 | 26.0 |

| 3^{rd} STEP | | | |
|---|---|---|---|
| TBBS | 1.4 | 1.4 | 1.4 |
| PVI | 0.3 | 0.3 | 0.3 |
| Sulfur | 4.1 | 4.1 | 4.1 |

| | | | |
|---|---|---|---|
| (*): comparison; (^): invention. NR: natural rubber (Standard Thai Rubber STR 20 Thaiteck Rubber); N326: carbon black; X50S®: 1:1 mixture of bis[3-(triethoxysilyl)propyl]tetrasulfide and N330 carbon black (X50S - Evonik-Degussa); CelTix™: diatomite particles having a BET surface area of 45 m²/g, a residue on a 325 Mesh sieve lower than 1% by weight with respect to the total weight of the diatomite particles, and an average maximum dimension of 10 µm (Celite Corporation); 6-PPD (antioxidant): N-(1,3-dimethylbutyl)-N'-phenyl-p-phenylene-diamine (Santoflex™ 6PPD Flexsys); TBBS (accelerator): N-tert-butyl-2-benzothiazylsulfenamide (Vulkacit® NZ/EGC - Lanxess); PVI (retardant): N-(cyclohexylthio)phthalimide (Santogard™ PVI - Flexsys). | | | |

All the samples were evaluated as described above and the results were summarized in the following Table 6.

**TABLE 6**

| Results | 6 (*) | 7 (^) | 8 (^) |
|---|---|---|---|
| GREEN PROPERTIES | | | |
| Mooney ML (1+4) 100°C | 76.2 | 71.5 | 70.9 |

| STATIC MECHANICAL PROPERTIES | | | |
|---|---|---|---|
| IRHD Hardness 23°C | 77.7 | 72.5 | 72.5 |
| IRHD Hardness 100°C | 68.1 | 67.6 | 67.9 |
| ΔIRHD | 9.60 | 4.90 | 4.60 |
| Tensile modulus 50% [MPa] | 1.88 | 2.38 | 2.57 |
| Tensile modulus 100% [MPa] | 3.64 | 4.55 | 5.29 |
| Tensile strength [MPa] | 16.86 | 16.50 | 16.32 |
| Elongation at break [%] | 312.5 | 348.3 | 324.0 |
| Energy [J/cm³] | 22.33 | 27.01 | 26.13 |

| DYNAMIC MECHANICAL PROPERTIES | | | |
|---|---|---|---|
| E' (23°C) | 9.42 | 7.73 | 8.08 |
| E' (70°C) | 7.24 | 6.35 | 6.61 |
| E' (100°C) | 6.97 | 6.22 | 6.62 |
| ΔE' (23°C - 100°C) | 2.45 | 1.51 | 1.88 |
| Tan delta (23°C) | 0.200 | 0.159 | 0.169 |
| Tan delta (70°C) | 0.123 | 0.097 | 0.092 |
| Tan delta (100°C) | 0.097 | 0.073 | 0.069 |

| | | | |
|---|---|---|---|
| (*): comparison; (^): invention. | | | |

The samples 7 and 8 according to the present invention showed a viscosity lower than that of sample 6 (comparative). A reduced viscosity in the non-crosslinked state means a better processability. The difference in hardness between 23 and 100 °C greatly decreases, which is an indication of a lower thermoplastic behavior.
The static mechanical properties were improved in samples 7 and 8, especially modulus at 100% and ultimate properties (elongation and energy at break). The dynamical mechanical properties of samples 7 and 8 were also improved, in particular in terms of reduced variation in E' with temperature (reduced "thermoplasticity", confirming IRHD indication) and of reduced hysteresis (lower Tan delta at 70°C), usually taken as indicator of lower rolling resistance of the tire.

The use of a small amount of silane coupling agent in sample 8, leads to further improvements vs. sample 7, except for ultimate properties, which slightly decrease due to higher compound rigidity.

### EXAMPLE 4

### Preparation of elastomeric compositions 9 and 10

The elastomeric compositions 9 and 10 given in Table 7 were prepared as follows (the amounts of the various components are given in phr).

All the components, except sulfur, accelerator (DCBS) and hexamethoxymethylmelamine (HMMM), were mixed together in an internal mixer (model Pomini PL 1.6) for about 5 min (1st Step). As soon as the temperature reached 145±5°C, the elastomeric composition was discharged.

The sulfur, accelerator (DCBS) and hexamethoxymethylmelamine (HMMM), were then mixed with the 1^{st} step composition in an open roll mixer (2^{nd} Step).

**TABLE 7**

| SAMPLE | 9 (*) | 10 (^) |
|---|---|---|
| 1^{st} STEP | | |
| NR | 100.0 | 100.0 |
| X50S® | 1.0 | 1.0 |
| N326 | 60.0 | 50.0 |
| CelTix™ | - | 13.0 |
| Zinc Oxide | 2.5 | 2.5 |
| 6-PPD | 2.0 | 2.0 |
| Resorcinol | 1.88 | 1.88 |

| 2^{nd} STEP | | |
|---|---|---|
| HMMM 65% | 5.00 | 5.00 |
| DCBS | 1.25 | 1.25 |
| Sulfur | 5.00 | 5.00 |

| | | |
|---|---|---|
| (*): comparison; (^): invention. NR: natural rubber (SMR GP - Lee Rubber Group); N326: carbon black; X50S®: 1:1 mixture of bis[3-(triethoxysilyl)propyl]tetrasulfide and N330 carbon black (X50S - Evonik-Degussa); CelTix™: diatomite particles having a BET surface area of 45 m²/g, a residue on a 325 Mesh sieve lower than 1% by weight with respect to the total weight of the diatomite particles, and an average maximum dimension of 10 µm (Celite Corporation); 6-PPD (antioxidant): N-(1,3-dimethylbutyl)-N'-phenyl-p-phenylene-diamine (Santoflex™ 6PPD - Flexsys); Resorcinol: 80% resorcinol dispersion in polymer binder (Rhenogran resorcinol 80/GE 1323 - Rhein Chemie); HMMM 65%: hexamethoxymethylmelamine (65%) on inert carrier (Cyrez 964 - Cytec); DCBS (accelerator): N,N'-dicyclohexyl-2-benzothiazylsulphenamide (Vulkacit® DZ/EGC - Lanxess). | | |

All the samples were evaluated as described above and the results were summarized in the following Table 8.

**TABLE 8**

| Results | 9 (*) | 10 (^) |
|---|---|---|
| GREEN PROPERTIES | | |
| Mooney ML (1+4) 100°C | 78.2 | 73.0 |
| Scorch Time MS 127°C [min] | 17.9 | 18.8 |

| STATIC MECHANICAL PROPERTIES | | |
|---|---|---|
| IRHD Hardness 23°C | 87.6 | 83.0 |
| IRHD Hardness 100°C | 81.2 | 78.3 |
| ΔIRHD | 6.40 | 4.70 |
| Tensile modulus 50% [MPa] | 2.45 | 2.56 |
| Tensile modulus 100% [MPa] | 4.24 | 4.90 |
| Tensile modulus 300% [MPa] | 16.44 | 17.29 |
| Tensile strength [MPa] | 16.75 | 18.28 |
| Elongation at break [%] | 331.2 | 343.3 |
| Energy [J/cm³] | 25.45 | 29.94 |

| DYNAMIC MECHANICAL PROPERTIES | | |
|---|---|---|
| E' (23°C) | 15.14 | 14.11 |
| E' (70°C) | 11.38 | 10.72 |
| ΔE' (23°C - 70°C) | 3.76 | 3.39 |
| Tan delta (23°C) | 0.192 | 0.166 |
| Tan delta (70°C) | 0.136 | 0.115 |

| | | |
|---|---|---|
| (*): comparison; (^): invention. | | |

The sample 10 according to the present invention showed a viscosity lower than that of reference sample 9 (comparative). A reduced viscosity in the non-crosslinked state means a better processability. Hardness decreases, and more importantly the difference in hardness between 23°C and 100°C decreases, which is an indication of a lower thermoplastic behavior.

The static mechanical properties were improved in sample 10, especially modulus at 100% and ultimate properties. The dynamical mechanical properties of sample 10 were also improved, in particular in terms of reduced variation in E' with temperature (reduced "thermoplasticity", confirming IRHD indication) and of reduced hysteresis (lower Tan delta at 70°C), usually taken as indicator of lower rolling resistance of the tire.

## Claims

1. A tire comprising at least one structural element including a crosslinked elastomeric material obtained by crosslinking a crosslinkable elastomeric composition comprising:
(a) 100 phr of at least one elastomeric polymer;
(b) from about 1 phr to about 150 phr of diatomite particles having a BET surface area, measured according to Standard ISO 5794-1:2005, higher than or equal to about 10 m²/g and an average maximum dimension higher than or equal to about 0.3 µm;
(c) from about 5 phr to about 120 phr of at least one reinforcing filler,
said tire comprising
- a carcass structure of a substantially toroidal shape, having opposite lateral edges associated with respective right-hand and left-hand bead structures;
- a belt structure applied in a radially external position with respect to said carcass structure;
- a tread band applied in a radially external position with respect to said belt structure;
- a pair of sidewalls applied laterally on opposite sides with respect to said carcass structure;
wherein said structural element is at least one of said pair of sidewalls or a pair of anti-abrasive layers placed in an axially external position with respect to said bead structures.

2. Tire according to claim 1, wherein said crosslinkable elastomeric composition comprises from about 5 phr to about 100 phr of said diatomite particles.

3. Tire according to claim 2, wherein said crosslinkable elastomeric composition comprises from about 5 phr to about 30 phr of said diatomite particles.

4. Tire according to any one of preceding claims, wherein said diatomite particles have a BET surface area higher than or equal to 25 m²/g.

5. Tire according to claim 4, wherein said diatomite particles have a BET surface area higher than or equal to 35 m²/g.

6. Tire according to any one of the preceding claims, wherein said diatomite particles have a BET surface area in the range of from about 25 m²/g to about 200 m²/g.

7. Tire according to claim 6, wherein said diatomite particles have a BET surface area in the range of from about 35 m²/g to about 100 m²/g.

8. Tire according to any one of preceding claims, wherein said diatomite particles have an average maximum dimension lower than or equal to about 35 µm.

9. Tire according to claim 8, wherein said diatomite particles have an average maximum dimension lower than or equal to about 15 µm.

10. Tire according to any one of the preceding claims, wherein said diatomite particles have an average maximum dimension in the range of from about 0.5 µm to about 25 µm.

11. Tire according to claim 10, wherein said diatomite particles have an average maximum dimension in the range of from about 1 µm to about 20 µm.

12. Tire according to claim 11, wherein said diatomite particles have an average maximum dimension in the range of from about 2 µm to about 15 µm.

13. Tire according to any one of preceding claims, wherein said diatomite particles have a residue on a 325 Mesh sieve lower than or equal to about 2.5% by weight with respect to the total weight of the diatomite particles.

14. Tire according to claim 13, wherein said diatomite particles have a residue on a 325 Mesh sieve lower than or equal to about 1% by weight with respect to the total weight of the diatomite particles.

15. Tire according to claim 14, wherein said diatomite particles have a residue on a 325 Mesh sieve lower than or equal to about 0.5% by weight with respect to the total weight of the diatomite particles.

16. Tire according to any one of preceding claims, wherein said crosslinkable elastomeric composition comprises from about 20 phr to about 90 phr of at least one reinforcing filler.

17. Tire according to any one of preceding claims, wherein said at least one reinforcing filler (c) is selected from the group comprising: carbon black, silica, alumina, aluminosilicates, calcium carbonate, kaolin, or mixtures thereof.

18. Tire according to claim 17, wherein said carbon black reinforcing filler has a surface area lower than or equal to about 20 m²/g.

## Patentansprüche

1. Reifen umfassend zumindest ein strukturelles Element mit einem vernetzten Elastomermaterial, das durch Vernetzen einer vernetzbaren Elastomerzusammensetzung erhalten wird, die Folgendes umfasst:
(a) 100 phr zumindest eines elastomeren Polymers;
(b) von etwa 1 phr bis etwa 150 phr Diatomitpartikel mit einem BET-Oberflächenbereich, gemessen nach der Norm ISO 5794-1:2005, von mehr als oder gleich etwa 10 m²/g und einer mittleren maximalen Dimension von mehr als oder gleich etwa 0,3 µm;
(c) von etwa 5 phr bis etwa 120 phr zumindest eines verstärkenden Füllstoffes,
wobei der Reifen umfasst
- eine Karkassenstruktur einer im Wesentlichen ringförmigen Gestalt mit gegenüberliegenden Seitenkanten, die jeweiligen rechtsseitigen und linksseitigen Wulststrukturen zugeordnet sind;
- eine Gürtelstruktur, die in Bezug auf die Karkassenstruktur in einer radial externen Position angelegt ist;
- einen Laufflächenring, der in Bezug auf die Gürtelstruktur in einer radial externen Position angelegt ist;
- ein Paar Seitenwände, die seitlich auf gegenüberliegenden Seiten in Bezug auf die Karkassenstruktur angebracht sind;
wobei das Strukturelement zumindest entweder eine des Paars von Seitenwänden oder eine des Paars von abriebfesten Lagen ist, die an einer axial inneren Position relativ zu den Wulststrukturen platziert sind.

2. Reifen nach Anspruch 1, wobei die vernetzbare Elastomerzusammensetzung von etwa 5 phr bis etwa 100 phr der Diatomitpartikel umfasst.

3. Reifen nach Anspruch 2, wobei die vernetzbare Elastomerzusammensetzung von etwa 5 phr bis etwa 30 phr der Diatomitpartikel umfasst.

4. Reifen nach einem der vorhergehenden Ansprüche, wobei die Diatomitpartikel einen BET-Oberflächenbereich von mehr als oder gleich 25 m²/g aufweisen.

5. Reifen nach Anspruch 4, wobei die Diatomitpartikel einen BET-Oberflächenbereich von mehr als oder gleich 35 m²/g aufweisen.

6. Reifen nach einem der vorhergehenden Ansprüche, wobei die Diatomitpartikel einen BET-Oberflächenbereich in dem Bereich von etwa 25 m²/g bis etwa 200 m²/g aufweist.

7. Reifen nach Anspruch 6, wobei die Diatomitpartikel einen BET-Oberflächenbereich in dem Bereich von etwa 35 m²/g bis etwa 100 m²/g aufweist.

8. Reifen nach einem der vorhergehenden Ansprüche, wobei die Diatomitpartikel eine mittlere maximale Dimension von weniger als oder gleich etwa 35 µm aufweisen.

9. Reifen nach Anspruch 8, wobei die Diatomitpartikel eine mittlere maximale Dimension von weniger als oder gleich etwa 15 µm aufweisen.

10. Reifen nach einem der vorhergehenden Ansprüche, wobei die Diatomitpartikel eine mittlere maximale Dimension in dem Bereich von etwa 0,5 µm bis etwa 25 µm aufweisen.

11. Reifen nach Anspruch 10, wobei die Diatomitpartikel eine mittlere maximale Dimension in dem Bereich von etwa 1 µm bis etwa 20 µm aufweisen.

12. Reifen nach Anspruch 11, wobei die Diatomitpartikel eine mittlere maximale Dimension in dem Bereich von etwa 2 µm bis etwa 15 µm aufweisen.

13. Reifen nach einem der vorhergehenden Ansprüche, wobei die Diatomitpartikel auf einem Sieb mit Mesh 325 einen Rückstand von weniger als oder gleich 2,5 Gew.-% in Bezug auf das Gesamtgewicht der Diatomitpartikel aufweisen.

14. Reifen nach Anspruch 13, wobei die Diatomitpartikel auf einem Sieb mit Mesh 325 einen Rückstand von weniger als oder gleich 1 Gew.-% in Bezug auf das Gesamtgewicht der Diatomitpartikel aufweisen.

15. Reifen nach Anspruch 14, wobei die Diatomitpartikel auf einem Sieb mit Mesh 325 einen Rückstand von weniger als oder gleich 0,5 Gew.-% in Bezug auf das Gesamtgewicht der Diatomitpartikel aufweisen.

16. Reifen nach einem der vorhergehenden Ansprüche, wobei die vernetzbare Elastomerzusammensetzung von 20 phr bis 90 phr zumindest eines verstärkenden Füllstoffs umfasst.

17. Reifen nach einem der vorhergehenden Ansprüche, wobei der zumindest eine verstärkende Füllstoff (c) ausgewählt ist aus der Gruppe umfassend: Kohlenstoffruß, Silikagel, Aluminiumoxid, Aluminiumsilikate, Calciumkarbonat, Kaolin oder Mischungen davon.

18. Reifen nach Anspruch 17, wobei der verstärkende Kohlenstoffruß-Füllstoff einen Oberflächenbereich von weniger als oder gleich etwa 20 m²/g aufweist.

## Revendications

1. Pneu comprenant au moins un élément de structure comportant un matériau élastomère réticulé obtenu par réticulation d'une composition élastomère réticulable comprenant :
(a) 100 phr d'au moins un polymère élastomère ;
(b) environ 1 phr à environ 150 phr de particules de diatomite ayant une surface spécifique BET, mesurée selon la norme ISO 5794-1:2005, supérieure ou égale à environ 10 m²/g et une dimension maximale moyenne supérieure ou égale à environ 0,3 µm ;
(c) environ 5 phr à environ 120 phr d'au moins une charge renforçante,
ledit pneu comprenant
- une structure de carcasse de forme essentiellement toroïdale, ayant des bords latéraux opposés associés à des structures de talon droite et gauche respectives ;
- une structure de ceinture appliquée dans une position radialement externe par rapport à ladite structure de carcasse ;
- une bande de roulement appliquée dans une position radialement externe par rapport à ladite structure de ceinture ;
- une paire de flancs appliqués latéralement sur des côtés opposés par rapport à ladite structure de carcasse ;
dans lequel ledit élément de structure est au moins l'un de ladite paire de flancs ou d'une paire de couches anti-abrasives placées dans une position axialement externe par rapport auxdites structures de talon.

2. Pneu selon la revendication 1, dans lequel ladite composition élastomère réticulable comprend environ 5 phr à environ 100 phr desdites particules de diatomite.

3. Pneu selon la revendication 2, dans lequel ladite composition élastomère réticulable comprend environ 5 phr à environ 30 phr desdites particules de diatomite.

4. Pneu selon l'une quelconque des revendications précédentes, dans lequel lesdites particules de diatomite ont une surface spécifique BET supérieure ou égale à 25 m²/g.

5. Pneu selon la revendication 4, dans lequel lesdites particules de diatomite ont une surface spécifique BET supérieure ou égale à 35 m²/g.

6. Pneu selon l'une quelconque des revendications précédentes, dans lequel lesdites particules de diatomite ont une surface spécifique BET se trouvant dans la plage allant d'environ 25 m²/g à environ 200 m²/g.

7. Pneu selon la revendication 6, dans lequel lesdites particules de diatomite ont une surface spécifique BET se trouvant dans la plage allant d'environ 35 m²/g à environ 100 m²/g.

8. Pneu selon l'une quelconque des revendications précédentes, dans lequel lesdites particules de diatomite ont une dimension maximale moyenne inférieure ou égale à environ 35 µm.

9. Pneu selon la revendication 8, dans lequel lesdites particules de diatomite ont une dimension maximale moyenne inférieure ou égale à environ 15 µm.

10. Pneu selon l'une quelconque des revendications précédentes, dans lequel lesdites particules de diatomite ont une dimension maximale moyenne se trouvant dans la plage allant d'environ 0,5 µm à environ 25 µm.

11. Pneu selon la revendication 10, dans lequel lesdites particules de diatomite ont une dimension maximale moyenne se trouvant dans la plage allant d'environ 1 µm à environ 20 µm.

12. Pneu selon la revendication 11, dans lequel lesdites particules de diatomite ont une dimension maximale moyenne se trouvant dans la plage allant d'environ 2 µm à environ 15 µm.

13. Pneu selon l'une quelconque des revendications précédentes, dans lequel lesdites particules de diatomite ont un résidu sur un tamis de 325 Mesh en une quantité inférieure ou égale à environ 2,5% en poids par rapport au poids total des particules de diatomite.

14. Pneu selon la revendication 13, dans lequel lesdites particules de diatomite ont un résidu sur un tamis de 325 Mesh en une quantité inférieure ou égale à environ 1% en poids par rapport au poids total des particules de diatomite.

15. Pneu selon la revendication 14, dans lequel lesdites particules de diatomite ont un résidu sur un tamis de 325 Mesh en une quantité inférieure ou égale à environ 0,5% en poids par rapport au poids total des particules de diatomite.

16. Pneu selon l'une quelconque des revendications précédentes, dans lequel ladite composition élastomère réticulable comprend environ 20 phr à environ 90 phr d'au moins une charge renforçante.

17. Pneu selon l'une quelconque des revendications précédentes, dans lequel ladite au moins une charge renforçante (c) est choisie dans le groupe comprenant : le noir de carbone, la silice, l'alumine, les aluminosilicates, le carbonate de calcium, le kaolin ou des mélanges de ceux-ci.

18. Pneu selon la revendication 17, dans lequel ladite charge renforçante de noir de carbone a une surface spécifique inférieure ou égale à environ 20 m²/g.
